Europäisches Patentamt

European Patent Office

Office européen des brevets

(19)

(11) **EP 1 486 281 A1**

(12) **EUROPEAN PATENT APPLICATION**

(43) Date of publication:
**15.12.2004 Bulletin 2004/51**

(51) Int Cl.7: **B23H 1/10**, B23H 7/36

(21) Application number: **04253256.4**

(22) Date of filing: **01.06.2004**

| | |
|---|---|
| (84) Designated Contracting States:<br>**AT BE BG CH CY CZ DE DK EE ES FI FR GB GR**<br>**HU IE IT LI LU MC NL PL PT RO SE SI SK TR**<br>Designated Extension States:<br>**AL HR LT LV MK** | (72) Inventors:<br>• **Arakawa, Yasuo**<br>  **Minamitsuru-gun Yamanashi 401-0511 (JP)**<br>• **Yamaguchi, Meguru FANUC Dai3virakaramatsu**<br>  **Minamitsuru-gun Yamanashi 401-0511 (JP)** |
| (30) Priority: **02.06.2003 JP 2003156997** | (74) Representative: **Billington, Lawrence Emlyn**<br>**Haseltine Lake,**<br>**Imperial House,**<br>**15-19 Kingsway**<br>**London WC2B 6UD (GB)** |
| (71) Applicant: **FANUC LTD**<br>**Minamitsuru-gun, Yamanashi 401-0597 (JP)** | |

(54) **Machining fluid treating device for wire-cut electric discharge machine**

(57)    A machining fluid treating device for a wire-cut electric discharge machine allows an operator to know the life of ion-exchange resin easily. Machining fluid is circulated to flow through ion-exchange resin, where, of the machining fluid, the flow rate L, the resistivity value R1 on the ion-exchange resin inlet side, and the resistivity value R2 on the ion-exchange resin outlet side are detected (S1). The ion-exchange capacity C of the ion-exchange resin is evaluated using the expression $C = (R2-R1) \times L$ (S3). Change in C, R1, R2 and L is displayed on a display screen (S2)(S4). A linear expression, a polynomial expression or the like representing change in C is determined on the basis of accumulated data on change in C, and time (life) TE by which the ion-exchange capacity will reach a predetermined capacity limit LIMIT is predicted and displayed (S7, S8). A little before the point in time corresponding to the elapsed time TE, a warning alarm is given (S11) to inform the operator that the ion-exchange resin should be replaced with new resin.

FIG. 6

```
                    START
                      |
         ┌────────────────────────┐
         │  STORE L, R1 AND R2     │ S1
         └────────────────────────┘
                      |
         ┌────────────────────────┐
         │  OUTPUT SIGNALS FOR     │ S2
         │  DISPLAY L, R1 AND R2   │
         └────────────────────────┘
                      |
         ┌────────────────────────┐
         │  CALCULATE AND STORE C  │ S3
         └────────────────────────┘
                      |
         ┌────────────────────────┐
         │  OUTPUT SIGNALS FOR     │ S4
         │  DISPLAY C              │
         └────────────────────────┘
                      |
    S5  ◇ C > LIMIT ? ──No──→ ┌──────────────┐ S10
         │                    │ OUTPUT ALARM │
        Yes                   └──────────────┘
         |                           |
    No ◇ INTEGRATED VALUE  S6       ( END )
         │ OF L > L0 ?
        Yes
         |
         ┌────────────────────────┐
         │ CALCULATE AND STORE     │ S7
         │ (UPDATE) TE             │
         └────────────────────────┘
                      |
         ┌────────────────────────┐
         │ OUTPUT SIGNALS FOR      │ S8
         │ DISPLAY TE              │
         └────────────────────────┘
                      |
    S9 ◇ TE > TE0 ? ──No──→ ┌──────────────┐ S11
        Yes                 │ OUTPUT ALARM │
                            └──────────────┘
```

**Description**

BACKGROUND OF THE INVENTION

1. Field of the Invention

The invention relates to a machining fluid treating device for a wire-cut electric discharge machine using ion exchange by ion exchange resin.

2. Description of Related Art

As is generally known, a wire-cut electric discharge machine uses machining fluid such as water. The machining fluid needs to be strictly managed so that the electric conductivity, namely the resistivity value of the machining fluid will be kept constant. If the resistivity value of the machining fluid changes during machining, the machining voltage observed between the power supply side which is supplying electric power for electric discharge machining and an object to be machined (measured value of machining voltage) changes. In the wire-cut electric discharge machining, in order to maintain the machining accuracy, control is performed so that the rate of removal from an object to be machined will be kept constant by regulating the feed speed using the machining voltage as an indicator. Hence, change in the measured value of machining voltage due to change in the resistivity value of the machining fluid has an adverse effect on this control and causes deterioration in the machining accuracy.

In particular, when the resistivity value of the machining fluid lowers to an extremely low level, leakage currents from the power supply side flow through a surface area of a to-be-machined object (of metal) which is outside an area receiving electric discharge (to-be-machined area). This causes electric corrosion and damages a product.

Normally, change in the resistivity value of the machining fluid occurs in the manner that the resistivity value lowers over time. This is because machining waste produced from electric discharge machining and electrolysis of the machining fluid caused during electric discharge machining are factors lowering the resistivity value of the machining fluid. In addition, when tap water having a low resistivity value is added to compensate for vaporized machining fluid, the resistivity value of the machining fluid lowers. Hence, conventionally, in order to prevent lowering of the resistivity value of the machining fluid, a technique of circulating the machining fluid to pass it through ion exchange resin is employed. Normally, supply of the machining fluid to pass it through the ion exchange resin is ON/OFF-controlled. While the supply is in an off-state, the resistivity value of the machining fluid lowers, and while the supply is in an on-state, the resistivity value of the machining fluid that has lowered during the off-state is brought back to be close to a desired predetermined value. By repeating this process, the resistivity value of the machining fluid is kept constant.

There is a problem that the ion-exchange capacity of the ion exchange resin deteriorates over time. Almost new ion exchange resin has a capacity to raise the resistivity value quickly. Meanwhile, the ion exchange resin whose capacity has deteriorated after long hours of use can only raise the resistivity value slowly. The ion exchange resin that has lost its capacity cannot raise the resistivity value.

Hence, an operator of a wire-cut electric discharge machine needs to determine the deterioration of ion exchange resin correctly.

The resistivity value of the machining fluid is detected by a resistance detector and displayed. Hence, on an actual work site, an operator pays attention to the displayed value, checks that the displayed resistivity value hardly rises or continues lowering even after the machining fluid is passed through the ion exchange resin for several hours, and determines that it is time to replace the ion exchange resin with new resin.

However, the determination is not easy, and cannot be carried out during nighttime or no-business-day unmanned operation. If unmanned operation continues with the lowered resistivity value, it may produce a large amount of defective machined goods.

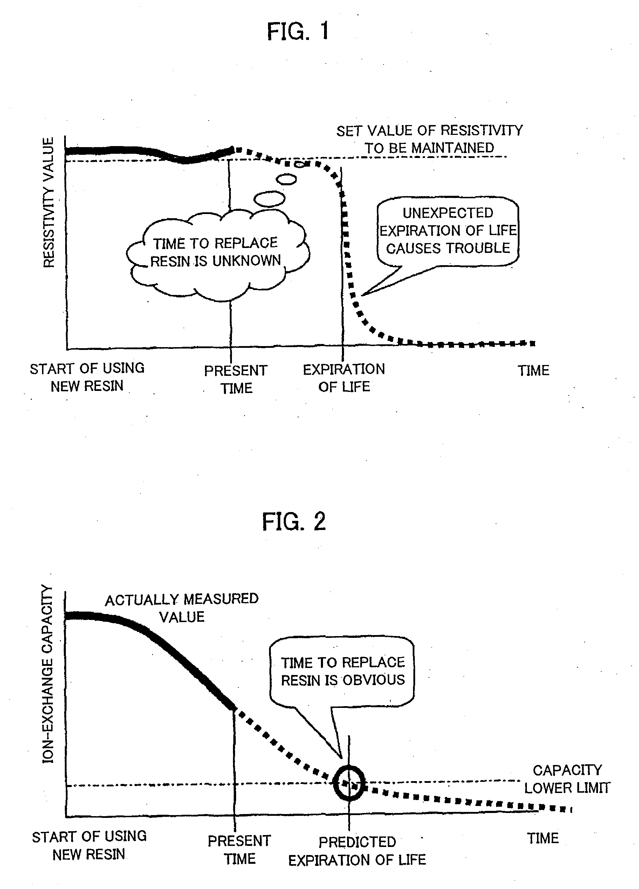

In order to avoid situations like this, there is a method in which the resistivity value of the machining fluid is monitored, and in which when it turns out that a certain reference value (set value of resistivity to be maintained) cannot be maintained, the operation is stopped forcibly. In this method, however, machining is stopped suddenly, which causes problems such as lowering of machine working ratio and delivery delay. In addition, the lowering of the resistivity value of the machining fluid due to the lowering of the ion-exchange capacity of the ion exchange resin over time does not occur in a manner that the resistivity value gradually lowers with an almost constant gradient over operating hours. There is a following feature: As shown in FIG. 1, while the ion-exchange capacity of the ion exchange resin is high, the resistivity is kept at a set value at which the resistivity is to be maintained by ON/OFF-control of the supply of the machining fluid to the ion exchange resin. However, when the ion-exchange capacity reaches a capacity lowering limit shown in FIG. 2, the resistivity value cannot be maintained by switching the supply of the machining fluid to an on-state, so that the resistivity value lowers rapidly. It is to be noted that a graph of FIG. 1 is plotted on the basis of actual measurement values obtained by measuring the resistivity value R1 on the ion-exchanger inlet side, in an embodiment described later.

In this case, rapid lowering of the resistivity value is not predictable, so that machining is stopped suddenly. Even if an operator checks the resistivity value of the machining fluid frequently with a measuring gauge or the like, it is not easy to predict when the resistivity value will lower rapidly. In other words, the life (the rest of a life; hereinafter same) of the ion exchange resin cannot be determined by simply monitoring the resistivity value of the machining fluid by itself.

Thus, on the actual work site, the ion exchange resin tends to be replaced fairly early and discarded before fully used, though it is expensive. Obviously, this increases the running cost, and is not good in view of environmental issues. There is no known document dealing with a technique for solving problems as above.

## SUMMARY OF THE INVENTION

The present invention improves a machining fluid treating device for a wire-cut electric discharge machine arranged to circulate machining fluid to pass it through ion exchange resin, so that the life of the ion exchange resin can be determined easily. Through this improvement, the invention also intends to prevent production of defective goods and increase in running cost in wire-cut electric discharge machining, and give consideration to the environment.

According to the invention, in a machining fluid treating device for a wire-cut electric discharge machine arranged to circulate machining fluid to pass it through ion exchange resin, a monitoring means for monitoring the ion-exchange capacity of the ion exchange resin is provided so that display of the ion-exchange capacity of the ion exchange resin and calculation and display of the life of the ion exchange resin can be performed on the basis of the result of monitoring by the monitoring means.

As stated above, lowering of the resistivity value of the machining fluid due to lowering of the ion-exchange capacity of the ion exchange resin over time has a feature that the resistivity value lowers rapidly from a certain time (see FIG. 1). Meanwhile, as shown in FIG. 2, lowering of the ion-exchange capacity over time has a feature that the ion-exchange capacity lowers gradually over time. Hence, if even only change in the ion-exchange capacity over time is displayed, an operator can easily know the life of the ion exchange resin approximately. In the example of FIG. 2, looking at a curve representing historical change shown in solid line, the operator can have an image of an approximately prediction curve shown in broken line. Thus, the operator can easily predict the time left until the ion-exchange capacity reaches a capacity lowering limit predetermined as an indicator of need to replace resin. It is to be noted that the graph of FIG. 2 is plotted concerning an embodiment described later, on the basis of an expression representing the ion-exchange capacity $(R2-R1)\times L$. In this expression, $R1$ is the resistivity value measured on the ion exchange resin inlet side, $R2$ is the resistivity value measured on the ion exchange resin outlet side, and $L$ is the flow rate of the machining fluid flowing through the ion exchange resin.

The prediction curve shown in broken line in FIG. 2 can be calculated using software in the device and displayed. When the prediction curve is displayed, the operator can know the time to replace the resin, more easily and definitely. Further, the time at which the ion-exchange capacity reaches the capacity lowering limit can be obtained as an intersection of the prediction curve and a line representing the capacity lowering limit, and the rest of the life (time left until replacement of the resin becomes necessary) can be displayed directly. Also, warning can be given about the life of the ion exchange resin at the time of expiration of the life or before (for example an hour before) expiration of the life.

If it is arranged that the operator can check the resistivity value of the machining fluid treated with the ion exchange resin, it helps the operator check the state of the machining fluid. In this case, it is desirable to provide an inlet-side resistivity value detecting means for detecting the resistivity value of the machining fluid on the inlet side on which the machining fluid flows into the ion exchange resin and display a historical record on the resistivity value of the machining fluid on the inlet side, on the basis of the result of detection by the inlet-side resistivity value detecting means. This is because by measuring the resistivity value of the machining fluid on the inlet side, the resistivity value of the machining fluid in a state that the resistivity value lowers most is obtained. When the resistivity value of the machining fluid measured on the inlet side is normal, it can be thought that the resistivity value of the machining fluid is normal at any place. When the resistivity value of the machining fluid is measured on the outlet side, even if the obtained resistivity value is normal, it is somewhat questionable whether the resistivity value of the machining fluid is normal at any place. Only, it is not useless to provide an outlet-side resistivity value detecting means for detecting the resistivity value of the machining fluid on the outlet side on which the machining fluid flows out of the ion exchange resin and display a historical record on the resistivity value of the machining fluid on the outlet side, on the basis of the result of detection by the outlet-side resistivity value detecting means. In particular, when the historical record on the resistivity value of the machining fluid on the inlet side and the historical record on the resistivity value of the machining fluid on the outlet side are displayed in parallel, it helps the operator know how the ion exchange resin is working, from these values and difference between these values.

The ion-exchange capacity of the ion exchange resin can be obtained by determining to what degree the resistivity value of the machining fluid rises by the machining fluid flowing through the ion exchange resin. For this purpose, the result of detection by the inlet-side resistivity value detecting means and the result of detection by the outlet-side resistivity value detecting means can be used. Only, when the flow rate changes, the rise in the resistivity value produced by the machining fluid flowing through the ion exchange resin changes even if the ion-exchange capacity stays unchanged. Hence, when the flow rate is expected to change, the flow rate (quantity per unit time) of the machining fluid flowing through the ion exchange resin needs to be detected. For this purpose, a flow rate detecting means can be provided at an appropriate place in the passage through which the machining fluid flows.

As a specific calculating formula, for example an expression:

$$\text{ion-exchange capacity} = (R2\text{-}R1) \times L[\Omega \cdot cm \cdot 1/min]$$

can be used, where R1 is the resistivity value detected by the inlet-side resistivity value detecting means, R2 is the resistivity value detected by the outlet-side resistivity value detecting means, and L is the flow rate (quantity per unit time) of the machining fluid flowing through the ion exchange resin.

In order to predict the life of the ion exchange resin, there can be employed a method in which a prediction formula approximately representing future change in the ion-exchange capacity of the ion exchange resin is determined on the basis of measured values of the ion-exchange capacity obtained this way, and in which the time left until the ion-exchange capacity reaches a predetermined lower limit is predicted using this prediction formula. The prediction formula can be a linear or polynomial expression concerning time, for example.

BRIEF DESCRIPTION OF THE DRAWINGS

FIG. 1 is a graph for explaining change in resistivity value of machining fluid over time and life management on the basis of a set value of resistivity to be maintained,

FIG. 2 is a graph for explaining change in ion-exchange capacity of ion exchange resin over time and life management,

FIG. 3 is an illustration schematically showing a whole arrangement of a machining fluid treating device for a wire-cut electric discharge machine according to an embodiment of the invention,

FIG. 4 is an illustration schematically showing an ion exchanger for a wire-cut electric discharge machine according to an embodiment of the invention,

FIG. 5 is a block diagram showing connection between a controller and other elements of the ion exchanger shown in FIG. 4,

FIG. 6 is a flow chart for explaining a process executed by the controller in an embodiment of the invention,

FIG. 7 is an illustration showing a display on a screen in an embodiment of the invention,

FIG. 8 is an illustration showing a display in the form of a numeric value table,

FIG. 9 is an illustration for explaining life calculation,

FIG. 10 is an illustration for explaining difference between the invention and prior art, and

FIG. 11 is a diagram showing change in quantities in the case where a selector valve was set in an off-position for a while to block a circulation passage.

DETAILED DESCRIPTION

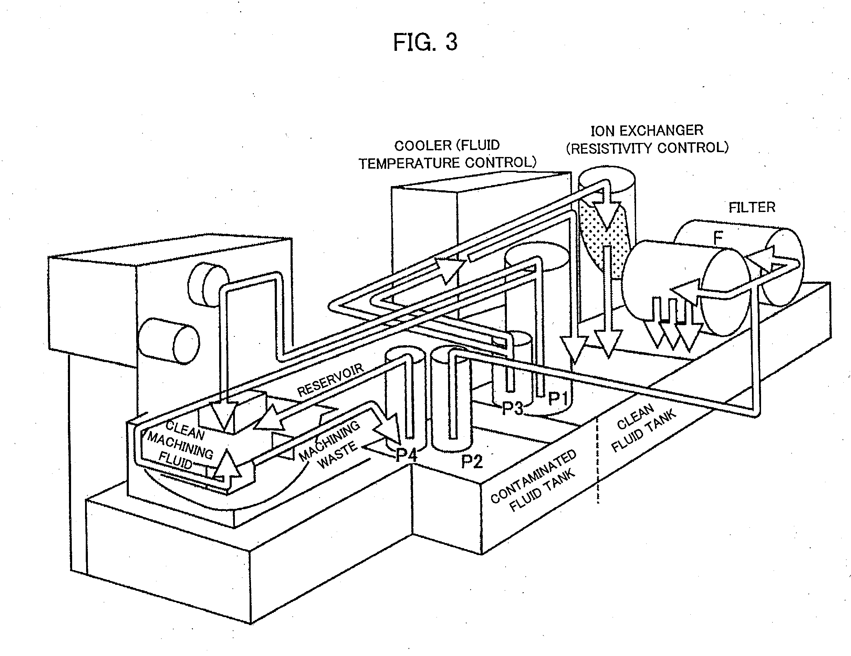

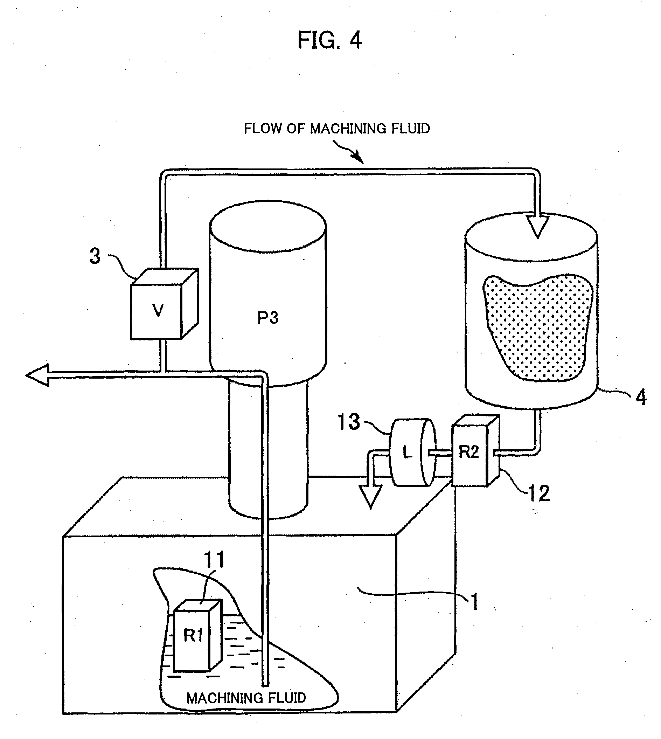

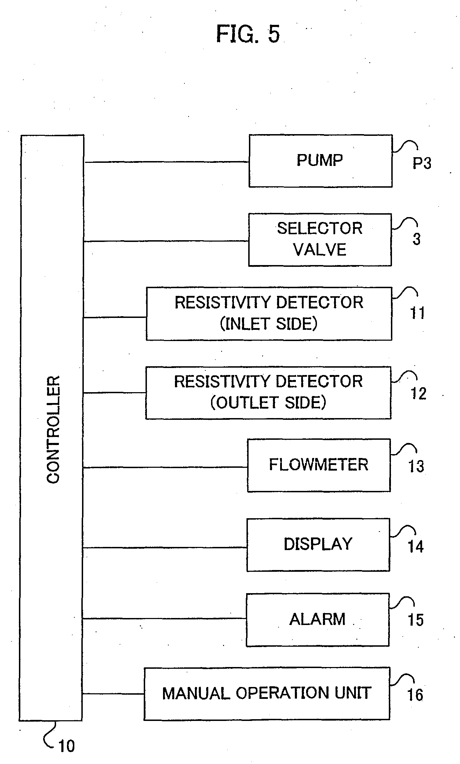

FIG. 3 is an illustration schematically showing a whole arrangement of a machining fluid treating device for a wire-cut electric discharge machine according to an embodiment of the invention (where a controller is not shown). FIG. 4 shows an arrangement of an ion exchanger according to the invention. FIG. 5 is a block diagram showing connection between a controller and elements of the ion exchanger. As shown in FIG. 3, the machining fluid treating device has four pumps P1 to P4. Of the four pumps, a pump P1 sucks up clean fluid from a clean fluid tank to feed it through pipes and apply it from an upper guiding part and a lower guiding part as machining fluid. A pump P2 sucks up liquid containing machining waste and the like from a contaminated fluid tank to pass it through a filter F for removing foreign substances such as machining waste, and return the liquid from which foreign substances such as machining waste have been removed to the clean fluid tank.

A pump P3 is provided to form a circulating flow for fluid temperature control and resistivity control. A pipe through which clean fluid sucked up from the clean fluid tank by the pump P3 flows divides into two passages. One of the two passages returns to the clean fluid tank through a cooler, while the other passage returns to the clean fluid tank through an ion exchanger. Generally, the temperature of the machining fluid tends to rise beyond an optimal temperature due to the influence of operation of the electric discharge machine and room temperature. Hence, the cooler is used for temperature control on the machining fluid.

The cooler is controlled to keep the temperature of the machining fluid at an optimal value on the basis of a signal from a temperature sensor (not shown) provided at an appropriate place. The circulation passage that runs through the ion exchanger is provided for controlling the resistivity value of the machining fluid. The details thereof will be described later, referring also to FIG. 4, etc. A pump P4 sucks up supernatant liquid (clean fluid) in the contaminated fluid tank to feed it through a pipe into a machining tank to be held in the machining tank as reserved fluid when necessary.

Next, referring to FIG. 4, the process relating to the resistivity value control will be described. Reference numeral 1 denotes a machining fluid tank for holding machining fluid. As mentioned above, machining fluid is sucked up by a pump P3 and fed to a machining fluid cooler, a tank in which an object is machined (machining tank) as reserved fluid, and an ion exchanger. Here, when necessary, a selector valve 3 is opened under later-described control to form a circulation passage through which the machining fluid is supplied to the ion exchanger 4 filled with ion exchange resin and returned to the machining fluid tank 1. Normally, while the machine is operating, the pump P3 is always operating to suck up the machining fluid from the machining fluid tank to feed it to necessary places.

The ion exchange resin in the ion exchanger 4 exchanges ions with the machining fluid in the well-known process when the machining fluid passes through the ion exchange resin to thereby lower the electric conductivity of the machining fluid, or in other words raise the resistivity value of the machining fluid. Resistivity detectors 11 and 12 are provided at two places to detect the resistivity value of the machining fluid before and after the machining fluid passing through the ion exchange resin. The resistivity detector 11 is provided to detect the resistivity value of the machining fluid on the ion exchange resin inlet side. The resistance detector 11 is arranged, for example near a pump suction port in the machining fluid tank 1 as shown in FIG. 4. The resistivity detector 11 may be arranged at an appropriate place (before the selector valve 3) in the passage through which the machining fluid sucked up by the pump P3 flows.

It should be avoided to arrange the resistivity detector 11 at a place near the ion exchanger outlet in the machining fluid tank 1. In that case, the resistance detector 11 cannot detect the resistivity value of the machining fluid on the ion exchange resin inlet side, correctly. The resistivity detector 12 is provided to detect the resistivity value of the machining fluid on the ion exchange resin outlet side. The resistivity detector 12 is arranged, for example after the ion exchanger 4 and before the machining fluid tank 1 as shown in FIG. 4.

In order to detect the flow rate (quantity per unit time) of the machining fluid flowing through the ion exchanger 4, a flowmeter 13 is arranged at an appropriate place in the circulation passage. In the present example, the flowmeter 13 is arranged after the resistivity detector 12 and before a discharge port into the machining fluid tank 1.

Elements of the machining fluid treating device having the basic arrangement described above, namely the pump P3, the selector valve 3, the resistivity detectors 11 and 12 and the flowmeter 13 are individually connected to a controller 10 as shown in FIG. 5. Also a display 14 and an alarm (a buzzer, a lamp and/or the like) 15 for displaying various kinds of data and giving warning and the like in a manner described later are connected to the controller 10. Also a manual operation unit 16 comprising a keyboard, a mouse, etc. is connected to the controller 10 to make it possible to edit programs for later-described processing, set and change values, and reset the alarm, for example.

The controller 10 may double as a controller of the whole wire-cut electric discharge machine, for example. Alternatively, the controller 10 may be so arranged as to use some of the functions of the controller of the whole wire-cut electric discharge machine. Alternatively, the controller 10 is provided exclusively for the machining fluid treating device. Though not specifically described, the controller 10 comprises a CPU, memory, an input/output device and software for exchanging signals with other elements, and software for displaying various kinds of data and giving warning and the like in a manner described later using the display 14 and the alarm (a buzzer, a lamp and/or the like) 15.

The controller 10 ON/OFF-controls the selector valve 3. In the ON/OFF-control, when the selector valve 3 is set in an on-position, the machining fluid sucked up by the pump P3 is fed to the machining fluid cooler, the machining portion, and the ion exchanger 4. When the selector valve 3 is set in an off-position, the machining fluid is not fed to the ion exchanger 4. Only, the quantity per unit time of the machining fluid fed to the ion exchange resin fluctuates to some degree. The actual flow rate of the machining fluid sucked up by the pump P3 and flowing through the ion exchanger is detected by the flowmeter 13, and it is so arranged that the detection output of the flowmeter 13 can be taken in at any time, according to an instruction from the CPU of the controller 10.

As mentioned above, the selector valve 3 is switched to a "circulation passage blocking state" to block the circulation passage through which the machining fluid is fed to the, ion exchanger 4. Otherwise, the selector valve 3 is in a "circulation passage maintaining state".

It is so arranged that the detection outputs of the resistivity detectors 11 and 12 can likewise be taken in at any time, according to an instruction from the CPU of the controller 10.

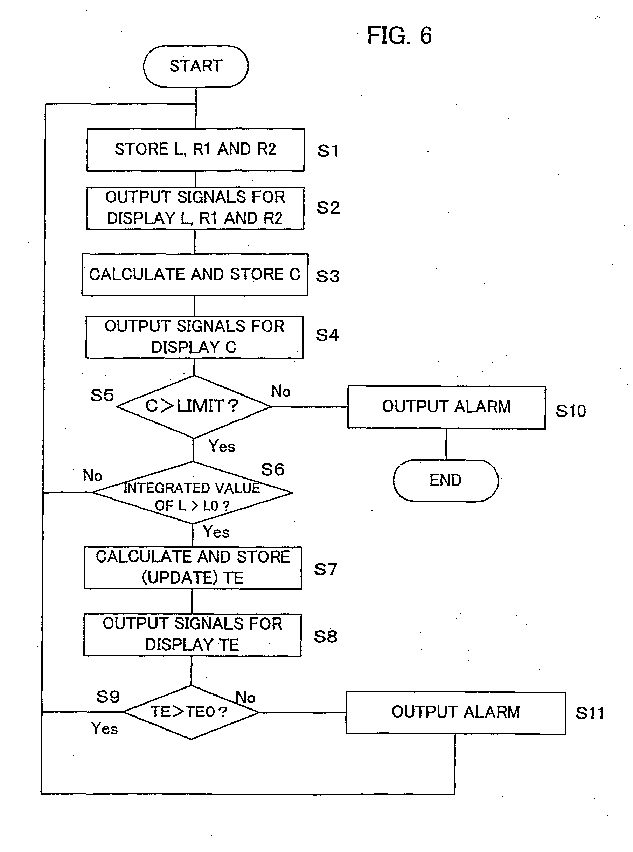

On the basis of the above-described structure and function, how the machining fluid treating device is operated will be described. First, the controller 10 checks the resistivity value on the inlet side R1. If it is beyond a predetermined value, the controller sets the selector valve 3 in the "circulation passage blocking state" so that the machining fluid will not be fed to the ion exchanger 4. If the resistivity value R1 is below the predetermined value, the controller sets the selector valve 3 in the "circulation passage maintaining state" and starts a life management process shown by a flow chart of FIG. 6. It is to be noted that in parallel with executing this process, the controller checks whether the resistivity value R1 is beyond the predetermined value or not, at predetermined intervals. If it is beyond the predetermined value, the controller sets the selector valve 3 in the "circulation passage blocking state" at any time so that the machining fluid will not be fed to the ion exchanger 4. Then, when R1 takes a value below the predetermined value again, the controller sets the selector valve 3 in the "circulation passage maintaining state" so that the machining fluid will be fed to the ion exchanger 4.

The point of each step of the life management process executed by the controller 10 will be described below. Here, in order to always obtain the actual operating time of the ion exchanger 4, it is so arranged that the controller 10 calculates "elapsed time", namely the total time for which the selector valve 3 is in the "circulating passage maintaining state", at short intervals. The elapsed time is reset to "0" by an operator's manual operation when resin is replaced with new resin.

Step S1: The detection outputs of the flowmeter 13 and the resistivity detectors 11 and 12 are read one by one and store them in the memory.

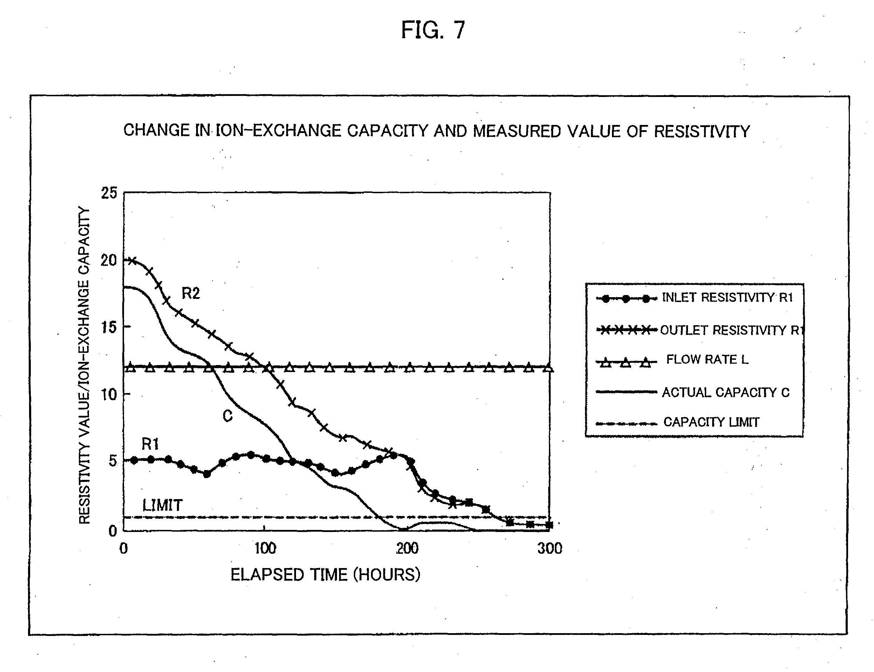

Step S2: Based on the stored detection outputs, the latest data on the flow rate L, the inlet-side resistivity value R1 and the outlet-side resistivity value R2 are displayed on the screen of the display 14. The data are displayed in the form of a two-dimensional graph as shown in FIG. 7, for example. Only, it is to be noted that though FIG. 7 shows change up to after expiration of a resin life, what is actually displayed is a graph showing change in the above-mentioned quantities from the time resin was replaced with new resin up to that time (the present). Regarding the inlet-side resistivity value R1, for example, a curve shown in solid line in FIG. 1 is displayed, and this curve becomes longer over time in a manner following a broken line of FIG 1.

Step 3: The current ion-exchange capacity C of the ion exchange resin is calculated. In order to calculate the ion-exchange capacity C, a calculating formula $C = (R2-R1) \times L$ can be used. However, another formula can be used as long as it represents a quantity that can be an indicator of change in resistivity value per unit flow rate produced by the machining fluid passing through the ion exchange resin. For example, a formula $C' = (R2/R1)/L$ is usable. As described later, when C has reached a value close to 0 (LIMIT), it can be determined that the life of the ion exchange resin has expired. In the case of C', when C' has reached a value close to 1 (predetermined value), it can be determined that the life of the ion exchange resin has expired.

Step 4: Based on the result of calculation at Step 3, the latest data on the ion-exchange capacity C (or C'; hereinafter same) are displayed on the screen of the display 14. An example of the display is shown in FIG. 7. As mentioned above, it is to be noted that though FIG. 7 shows change up to after expiration of a resin life, what is actually displayed is a graph showing change in C-value from the time resin was replaced with new resin up to that time (the present). Specifically, regarding the C-value, a curve shown in solid line in a graph of FIG. 2 is displayed, and this curve becomes longer over time in a manner following a broken line of FIG 2.

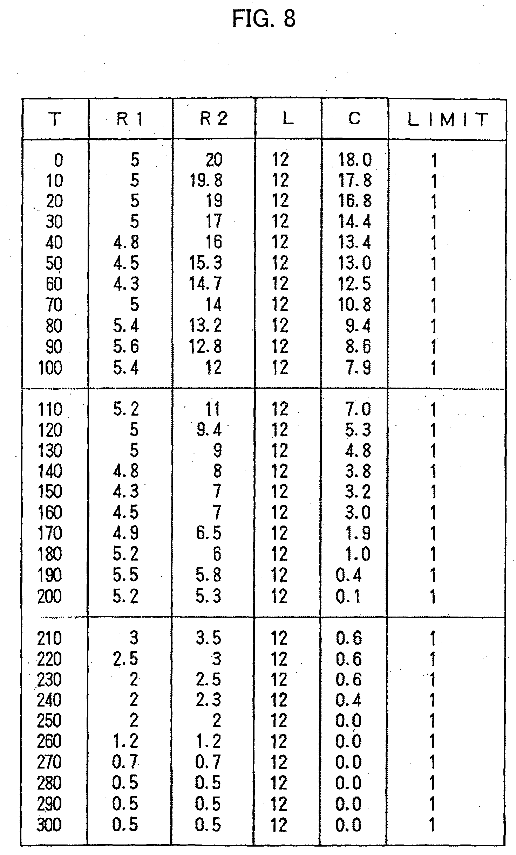

As shown in FIG. 7, also the limit of the ion-exchange capacity determined from a practical standpoint (denoted by "capacity limit") is displayed on the screen, in addition to change in the resistivity value measured on the inlet side (denoted by "inlet resistivity") R1, the resistivity value measured on the outlet side (denoted by "outlet resistivity") R2 and the ion-exchange capacity (denoted by "actual capacity") C. In addition to or in place of the graph, data may be displayed in the form of a numeric value table as shown in FIG. 8. It is to be noted that the letter T in the table denotes elapsed time after the replacement of resin (resetting).

Step S5: It is checked that the ion-exchange capacity (actual capacity) C obtained at Step S3 is beyond the predetermined capacity limit LIMIT and the procedure proceeds to Step S6. If C ≤ LIMIT, the procedure proceeds to Step S10. It is to be noted that normally, before the result of determination at Step S5 becomes negative, the result of later-described determination at Step S9 should have become negative. Hence, the proceeding to Step S10 is actually rare. Only, this can happen when the device is operated without replacing the ion exchange resin whose life has expired, or when a system malfunction (resistance detector failure, for example) has happened.

Step S6: The integrated value of the flow rate is obtained and it is checked whether or not it exceeds a predetermined value L0. If it exceeds L0, the procedure proceeds to Step S7. If not, the procedure returns to Step S1. The reason for provision of Step S6 is as follows: In the beginning stage where the integrated value of the flow rate is very small, historical data is not accumulated enough. This leads to insufficient reliability of later-described life calculation. Hence, the proceeding to step of life calculation is avoided. Besides, generally, life calculation is not considered necessary in such beginning stage.

Whether the integrated value of the flow rate is beyond the predetermined value L0 or not may be displayed on the display screen. Further, on the assumption that the flow rate does not change to a large degree, a reference value for the elapsed time, not for the integrated flow rate may be predetermined. In this case, when the elapsed time is beyond the reference value, it is determined that historical data is accumulated enough, and life calculation is performed.

Step S7: The calculation to predict the life of the ion exchange resin is performed. In order to predict the life of the ion exchange resin, an approximate expression representing change in the ion-exchange capacity C (a linear or polynomial expression concerning elapsed time, for example) is obtained from the historical record on change in the ion-exchange capacity C, and the time left until the value of the approximate expression reaches LIMIT is calculated. When the flow rate changes to a large degree (for example, when the pump can be switched to a plurality of capacity levels), it is desirable to calculate and display "the life under the maximum flow rate condition" and "the life under the minimum flow rate condition" in addition to the life under the reference flow rate condition (see the next Step S8).

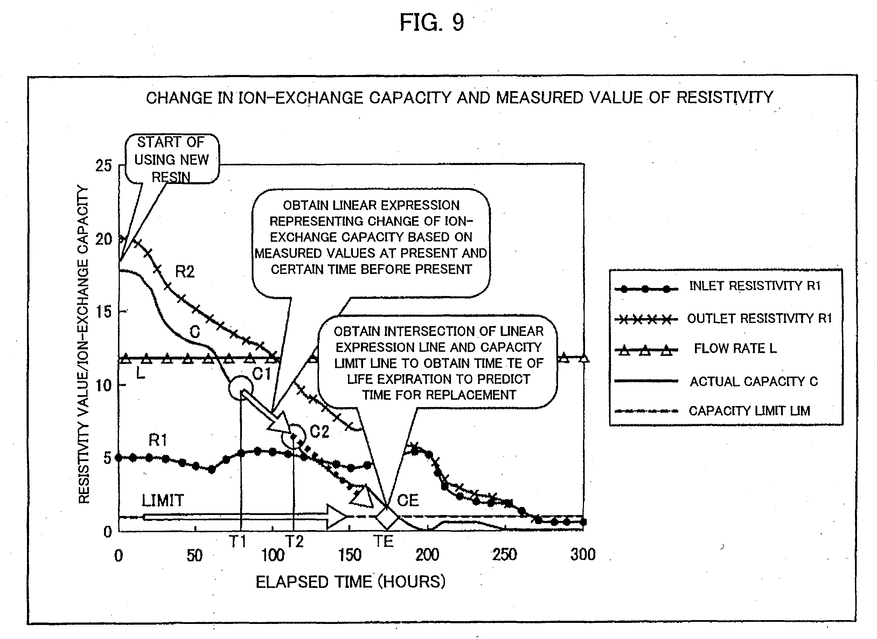

FIG. 9 is a diagram for explaining how to calculate the life using a linear expression. The basic expression that provides a basis for life calculation is the above-mentioned expression representing the ion-exchange capacity (actual capacity), namely $C = (R2-R1)*L$. Here, on the assumption that the flow rate L is almost constant, $C(= Y)$ is approximated by a linear expression concerning time X: $Y = \alpha*X+\beta$. Then, using data up to the present, $\alpha$ and $\beta$ are determined.

Suppose that C2 is the ion-exchange capacity calculated from the values of R1 and R2 at present (T = T2), according to the above expression. C2 is expressed as $C2 = \alpha*T2+\beta$. Suppose that C1 is the ion-exchange capacity calculated from the values of R1 and R2 an appropriate time before the present, namely at a point in time corresponding to elapsed time T1 (so predetermined that this point in time is after the result of the above-mentioned determination at Step S6 became affirmative), according to the above expression. C1 is expressed as $C1 = \alpha*T1+\beta$.

From these equations, the gradient $\alpha$ and the intercept $\beta$ are obtained as follows:

$$\alpha = (C2-C1)/(T2-T1)$$

$$\beta = (C1T2-C2T1)/(T2-T1).$$

Hence, the approximate expression representing the ion-exchange capacity is expressed as follows:

$$Y = (C2-C1)/(T2-T1)X+(C1T2-C2T1)/(T2-T1) \tag{1}.$$

Meanwhile, it is obvious that the line representing the predetermined value LIMIT of the ion-exchange capacity is given by an equation

$$Y = LIMIT \tag{2}.$$

By solving the equations (1) and (2) as simultaneous equations, the predicted value of time TE by which the ion-exchange capacity will reach the predetermined value LIMIT (namely, the life of the resin) is obtained as follows:

$$TE = (LIMIT-\beta)/\alpha = [LIMIT-(C1T2-C2T1)/(C2-C1) \tag{3}.$$

The time left until the life expires is TE-T2. The value of TE obtained by the calculation and the elapsed time T2 that indicates the point in time when the calculation was performed are stored in the memory.

An actual example of this calculation will be shown below. Suppose that LIMIT = 1, T2 = 160 hours and T1 = 60 hours. When the calculation is performed using numeric values shown in FIG.8, the result is as follows:

gradient $\alpha$ = -0.0948,
intercept $\beta$ = -18.168,
current actual capacity C2 = 3,
actual capacity C 1 100 hours before the present = 12.48 (rounded to 12.5 in FIG. 8),
life (corresponding to a point in time at which the capacity is predicted to reach the limit) TE = 181.097 (hours), and
time left until the life expiration TE-T2 = 21.097 (hours).

Thus, it is predicted that in about 21 hours, the ion-exchange capacity will reach the limit.

Step S8: The life TE and the time (TE-T2) left until the life expiration obtained at Step S7 are displayed on the display 14. In the above example, TE = 181.097 (hours) and TE-T2 = 21.097 (hours) are displayed on the display, for example. Further, if a line, a curve or the like obtained according to the approximate expression is shown in broken line in a graph as in FIG. 2, for example, the operator can recognize the life, more easily. If a point representing the elapsed time TE on the axis representing time is highlighted with a blinking mark or the like, it is more convenient.

Step S9: It is determined whether or not the time (TE-T2) left until the life expiration is below a predetermined warning level T0 (1 hour, for example). If it is below T0, the procedure proceeds to Step S11. If not, the procedure returns to Step S1 and repeats the processing.

Step S10: An alarm 1 indicating expiration of the resin life or some other abnormality is outputted, and the processing is terminated. For example, a red lamp of the alarm 15 is made to blink and/or a buzzer is sounded (at a high level) to warn the operator about the situation. Also a signal for stopping the operation of the machine can be sent out at this time.

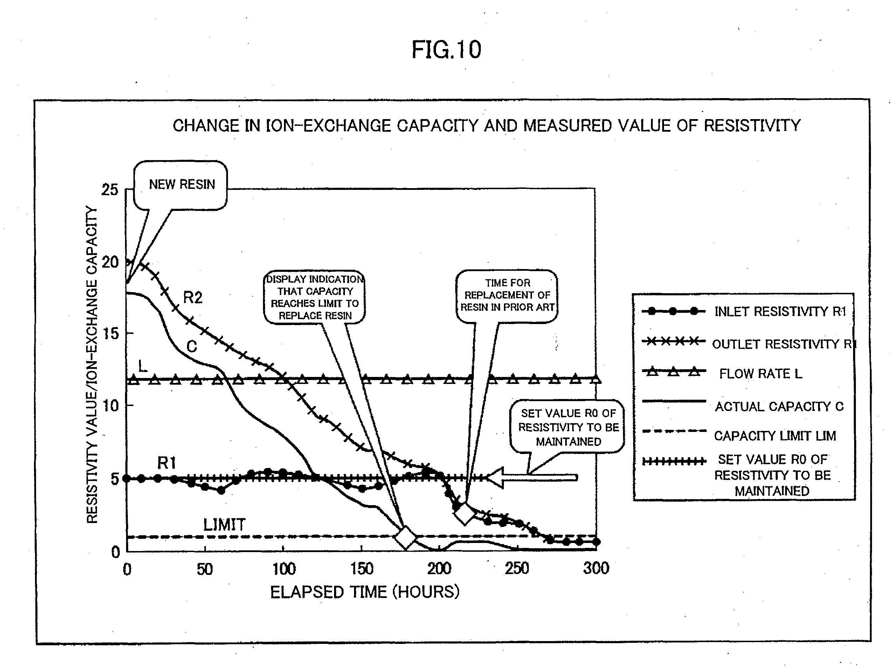

Step S 11: An alarm 2 indicating that the resin life will expire in a short time is outputted, and the procedure returns to Step S1 and repeats the processing. For example, a yellow lamp of the alarm 15 is made to blink and/or the buzzer is sounded (at a low level) to warn the operator about the situation. Normally, at this stage, the operator stops the operation of the machine (and also terminates the present process forcibly) and replaces the ion exchange resin with new resin. Thus, production of defective goods is prevented. Also, too early, wasteful replacement of ion exchange resin is prevented. FIG. 10 shows this advantage graphically. Conventionally, the time to replace the ion exchange rein as shown in FIG. 10 is actually determined by an operator mostly depending on his/her intuition, hence the reliability is low. In contrast, in the present invention, since the capacity limit can be determined on the basis of the objective criterion, the replacement time can be determined appropriately.

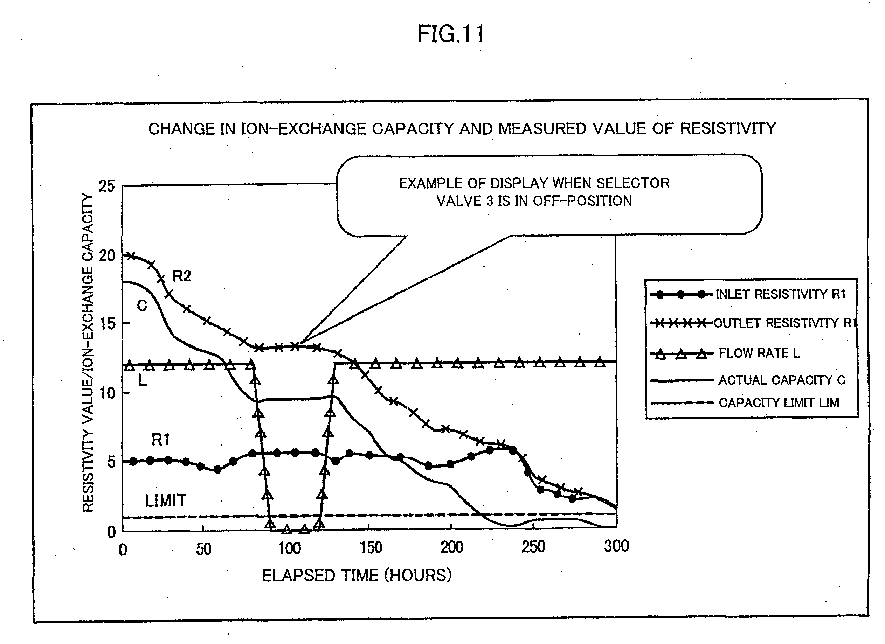

During the execution of the above process, if, due to the ion exchange, the inlet-side resistivity value R1 becomes too high compared with the set value of resistivity to be maintained, the selector valve 3 is switched to the off-position, namely set in the "circulation passage blocking state" so that the machining fluid will not be fed from the pump P3 to the ion exchanger 4, as mentioned above. This state is maintained until the too high inlet-side resistivity value R1 is normalized. FIG. 11 shows an example of change in quantities (inlet resistivity value R1, outlet resistivity value R2, flow rate L and actual capacity C), in the case where the selector valve 3 was set in the circulation passage blocking state for a while for the above reason.

As shown in FIG. 11, while the selector valve 3 is in the off-position, ion exchange is suspended, so that the ion exchange resin does not deteriorate. Thus, at Step S3, the ion-exchange capacity C is determined to be the same as that obtained previously (in the previous cycle). From this time until the supply of the machining fluid to the ion exchanger 4 is resumed, the same C-value is used, and at Step S4, regarding the C-value, a horizontal line is displayed.

Alternatively, the following arrangement is possible: At the same time as the selector valve 3 is set in the "circulation passage blocking state", calculation of the elapsed time is suspended, and the C-value, etc. are displayed as blinking luminescent spots. After the circulation is resumed, the calculation of the elapsed time is resumed, and the manner of display is returned to the normal one. This arrangement is advantageous regarding the creation of the approximate expression representing change in C-value. (When the graph showing change in C-value includes a horizontal-line part, correction calculation for removing the horizontal-line part is needed when the approximate expression is created.)

When the value R1 returns to the reference value or below, the selector valve 3 is switched back to the circulation passage forming state, so that the supply of the machining fluid to the ion exchanger 4 is resumed. From the next cycle, the ion-exchange capacity C is calculated at Step S3, or in other words updating of the ion-exchange capacity C is resumed. At Step S4, graph display is performed on the basis of the new C-value, starting from the end of the horizontal-line part.

Although the change of the ion-exchange capacity is predicted using a linear equation in the above-described example, it may be predicted in another manner. As examples, (A) a manner in which a polynomial equation (here, quadratic equation) is used and (B) a manner in which a equation obtained by least mean square approximation is used will be described briefly.

(A) Manner in which a polynomial equation (quadratic equation) is used

Regarding three points of time (one may be the present time) corresponding to elapsed time T1, T2 and T3, the following expressions are formed using the actual capacity C1, C2 and C3:

$$C1 = \alpha T1^2 + \beta T1 + \gamma,$$

$$C2 = \alpha T2^2 + \beta T2 + \gamma, \text{ and}$$

$$C3 = \alpha T3^2 + \beta T3 + \gamma.$$

These three expressions are regarded as simultaneous linear equations concerning $\alpha$, $\beta$ and $\gamma$, and solved to determine $\alpha$, $\beta$ and $\gamma$. As a result, an approximate expression for estimation $Y = \alpha X^2 + \beta X + \gamma$ is determined. Then, like in the case where a linear equation is used, TE is obtained as an intersection of $Y = \alpha X^2 + \beta X + \gamma$ and $Y = $ LIMIT.

(B) Manner in which least mean square approximation is used

To more than one coordinate point (T1, C1), (T2, C2), (T3, C3)...(Tn, Cn), a line is applied by least mean square approximation, where T1, T2, T3...Tn denote elapsed time (one of which may be elapsed time corresponding to the present) and C1, C2, C3...Cn denote the actual capacity. As a result, the actual capacity (= Y) corresponding to the elapsed time T (= X) is represented by an expression (4) below. Expressions (5) and (6) below represent the definitions of the mean value of T (upper bar T) and the mean value of C (lower bar C) in the expression (4), respectively.

Then, in the expression (4), T and C are replaced by X and Y, and TE is obtained as an intersection of this equation (4) and Y = LIMIT. Suppose that CE is the lower limit of the ion-exchange capacity, the result is given by the following expression (7).

$$C = \frac{\sum_{i=1}^{n}(Ti - \overline{T})(Ci - \overline{C})}{\sum_{i=1}^{n}(Ti - \overline{T})^2} * (T - \overline{T}) + \overline{C} \qquad \cdots\cdots (4)$$

$$\overline{T} = \frac{1}{n}\sum_{i=1}^{n} Ti \qquad \cdots\cdots (5)$$

$$\overline{C} = \frac{1}{n}\sum_{i=1}^{n} Ci \qquad \cdots\cdots (6)$$

$$TE = \overline{T} + \frac{\sum_{i=1}^{n}(Ti - \overline{T})^2}{\sum_{i=1}^{n}(Ti - \overline{T})(Ci - \overline{C})} * (CE - \overline{C}) \qquad \cdots\cdots (7)$$

Though the ion-exchange capacity is obtained using the resistivity value of the machining fluid in the above-described example, it may be obtained using the electric conductivity thereof.

In the present invention, whether the resin life will expire or not can be easily determined before nighttime or no-business-day unmanned operation starts. Hence, deterioration in machining accuracy can be prevented. Also the risk of the life of the ion exchange resin expiring during operation, the ion-exchange capacity lowering rapidly and hence machining being stopped is removed. Further, it is not necessary any more, to wastefully replace the ion exchange resin whose life does not expire yet. Thus, the present invention is advantageous also in terms of cost and environmental conservation.

**Claims**

**1.** A machining fluid treating device for treating machining fluid for a wire-cut electric discharge machine, comprising:

ion-exchange resin though which the machining fluid flows;
monitoring means for monitoring ion-exchange capacity of said ion-exchange resin; and
ion-exchange capacity displaying means for displaying ion-exchange capacity of said ion-exchange resin based on result of the monitoring by said monitoring means.

2. A machining fluid treating device according to claim 1, wherein said monitoring means calculates the ion-exchange capacity of said ion-exchange resin based on change in resistivity of the machining fluid before and after the machining fluid flows through said ion-exchange resin.

3. A machining fluid treating device according to claim 1, wherein said monitoring means calculates the ion-exchange capacity of said ion-exchange resin based on change in the resistivity of the machining fluid before and after the machining fluid flows through said ion-exchange resin and a flow rate of the machining fluid flowing through said ion-exchange resin.

4. A machining fluid treating device according to claim 3, further comprising:

   inlet resistivity detecting means for detecting the resistivity of the machining fluid at an inlet side where the machining fluid flows into said ion-exchange resin;
   outlet resistivity detecting means for detecting the resistivity of the machining fluid on an outlet side where the machining fluid flows out of said ion-exchange resin; and
   flow rate detecting means for detecting a flow rate of the machining fluid flowing through said ion-exchange resin,

   wherein said monitoring means obtains the ion-exchange capacity of the ion-exchange resin based on the following calculation formula:

$$\text{Ion-exchange capacity} = (R2-R1) \times L[\Omega \cdot cm \cdot 1/min],$$

   where R1 is a value of the resistivity detected by said inlet-side resistivity detecting means, R2 is a value of the resistivity detected by said outlet resistivity detecting means, and L is the flow rate detected by said flow rate detecting means.

5. A machining fluid treating device according to claim 4, further comprising:

   life predicting means for predicting a life of said ion-exchange resin based on change in the ion-exchange capacity obtained by the monitoring means; and
   life estimation displaying means for displaying the predicted life of said ion-exchange resin based on result of the estimation by said life predicting means.

6. A machining fluid treating device according to claim 5, wherein said life predicting means determines an estimation formula approximately representing a future change in the ion-exchange capacity of said ion-exchange resin based on result of the monitoring by said monitoring means, and predicts a time period left until the ion-exchange capacity reaches a predetermined lower limit according to the estimation formula.

7. A machining fluid treating device according to claim 6, wherein the estimation formula is a linear or polynomial expression with respect to time.

8. A machining fluid treating device according to claim 1, further comprising:

   inlet resistivity detecting means for detecting the resistivity of the machining fluid at an inlet side where the machining fluid flows into said ion-exchange resin; and
   inlet historical record displaying means for displaying a historical record on the resistivity value of the machining fluid at the inlet side, based on result of the detection by said inlet resistivity detecting means.

9. A machining fluid treating device according to claim 1, further comprising
   outlet resistivity detecting means for detecting the resistivity of the machining fluid at an outlet side where the machining fluid flows out of said ion-exchange resin; and

outlet historical record displaying means for displaying a historical record on the resistivity value of the machining fluid at the outlet side, based on result of the detection by said outlet-side resistivity value detecting means.

10. A machining fluid treating device for treating machining fluid for a wire-cut electric discharge machine, comprising:

ion-exchange resin through which the machining fluid flows;
monitoring means for monitoring ion-exchange capacity of said ion-exchange resin;
life predicting means for predicting a life of said ion-exchange resin based on change of the ion-exchange capacity monitored by said monitoring means; and
life estimation displaying means for displaying the predicted life of said ion-exchange resin based on result of the estimation by said life predicting means.

11. A machining fluid treating device according to claim 10, further comprising warning means for issuing an alarm regarding the life of the ion-exchange resin.

12. A machining fluid treating device according to claim 10, wherein said monitoring means calculates the ion-exchange capacity of said ion-exchange resin based on change in resistivity of the machining fluid before and after the machining fluid flows through said ion-exchange resin.

13. A machining fluid treating device according to claim 10, wherein said monitoring means calculates the ion-exchange capacity of said ion-exchange resin based on change in the resistivity of the machining fluid before and after the machining fluid flows through said ion-exchange resin and a flow rate of the machining fluid flowing through said ion-exchange resin.

14. A machining fluid treating device according to claim 13, further comprising:

inlet resistivity detecting means for detecting the resistivity of the machining fluid at an inlet side where the machining fluid flows into said ion-exchange resin;
outlet resistivity detecting means for detecting the resistivity of the machining fluid on an outlet side where the machining fluid flows out of said ion-exchange resin; and
flow rate detecting means for detecting a flow rate of the machining fluid flowing through said ion-exchange resin,

wherein said monitoring means obtains the ion-exchange capacity of the ion-exchange resin based on the following calculation formula:

$$\text{the ion-exchange capacity} = (R2\text{-}R1) \times L[\Omega \cdot cm \cdot 1/min],$$

where R1 is a value of the resistivity detected by said inlet-side resistivity detecting means, R2 is a value of the resistivity detected by said outlet resistivity detecting means, and L is the flow rate detected by said flow rate detecting means.

15. A machining fluid treating device according to claim 10, further comprising:

inlet resistivity detecting means for detecting the resistivity of the machining fluid at an inlet side where the machining fluid flows into said ion-exchange resin; and
inlet historical record displaying means for displaying a historical record on the resistivity value of the machining fluid at the inlet side, based on result of the detection by said inlet resistivity detecting means.

16. A machining fluid treating device according to claim 10, further comprising:

outlet resistivity detecting means for detecting the resistivity of the machining fluid at an outlet side where the machining fluid flows out of said ion-exchange resin; and
outlet historical record displaying means for displaying a historical record on the resistivity value of the machining fluid at the outlet side, based on result of the detection by said outlet-side resistivity value detecting means.

**17.** A machining fluid treating device according to claim 10, wherein said life predicting means determines an estimation formula approximately representing a future change in the ion-exchange capacity of said ion-exchange resin based on result of the monitoring by said monitoring means, and predicts a time period left until the ion-exchange capacity reaches a predetermined lower limit according to the estimation formula.

**18.** A machining fluid treating device according to claim 17, wherein the estimation formula is a linear or polynomial expression with respect to time.

**19.** A machining fluid treating device for treating machining fluid for a wire-cut electric discharge machine comprising:

ion-exchange resin through which the machining fluid flows;
outlet-side resistivity detecting means for detecting resistivity of the machining fluid at an outlet side where the machining fluid flows out of said ion-exchange resin;
monitoring means for monitoring ion-exchange capacity of said ion-exchange resin;
life predicting means for predicting a life of said ion-exchange resin based on change in the ion-exchange capacity monitored by said monitoring means and the result of detection by said outlet resistivity detecting means; and
life estimation displaying means for displaying estimation of the life of said ion-exchange resin based on result of the estimation by said life predicting means.

**20.** A machining fluid treating device according to claim 19, further comprising an inlet resistivity detecting means for detecting resistivity of the machining fluid at an inlet side where the machining fluid flows into said ion-exchange resin,
wherein said monitoring means obtains the ion-exchange capacity of said ion-exchange resin based on result of the detection by said inlet resistivity detecting means and result of the detection by said outlet resistivity detecting means.

**21.** A machining fluid treating device according to claim 19, wherein said life predicting means determines an estimation formula approximately representing a future change in the ion-exchange capacity of said ion-exchange resin based on result of the monitoring by said monitoring means, and predicts a time period left until the ion-exchange capacity reaches a predetermined lower limit according to the estimation formula.

**22.** A machining fluid treating device according to claim 21, wherein the estimation formula is a linear or polynomial expression with respect to time.

EP 1 486 281 A1

FIG. 1

FIG. 2

# FIG. 3

COOLER (FLUID TEMPERATURE CONTROL)

ION EXCHANGER (RESISTIVITY CONTROL)

FILTER

F

RESERVOIR

P3 P1

P4 P2

CLEAN MACHINING FLUID

MACHINING WASTE

CONTAMINATED FLUID TANK

CLEAN FLUID TANK

# FIG. 4

FLOW OF MACHINING FLUID

3

V

P3

4

13

L

R2

12

11

R1

1

MACHINING FLUID

# FIG. 5

# FIG. 6

```
                    START

          ┌─────────────────────┐
          │  STORE L, R1 AND R2  │  S1
          └─────────────────────┘

          ┌─────────────────────┐
          │  OUTPUT SIGNALS FOR  │  S2
          │  DISPLAY L, R1 AND R2│
          └─────────────────────┘

          ┌─────────────────────┐
          │ CALCULATE AND STORE C│  S3
          └─────────────────────┘

          ┌─────────────────────┐
          │  OUTPUT SIGNALS FOR  │  S4
          │     DISPLAY C        │
          └─────────────────────┘

   S5        ◇ C>LIMIT? ◇    No    ┌──────────────────┐
                                    │  OUTPUT ALARM    │  S10
                  │ Yes             └──────────────────┘
                                            │
   No      ◇ INTEGRATED VALUE            END
   S6         OF L > L0 ? ◇

                  │ Yes
          ┌─────────────────────┐
          │ CALCULATE AND STORE  │  S7
          │     (UPDATE) TE      │
          └─────────────────────┘

          ┌─────────────────────┐
          │  OUTPUT SIGNALS FOR  │  S8
          │     DISPLAY TE       │
          └─────────────────────┘

   S9        ◇ TE>TE0? ◇    No    ┌──────────────────┐
   Yes                             │  OUTPUT ALARM    │  S11
                                   └──────────────────┘
```

# FIG. 7

CHANGE IN ION-EXCHANGE CAPACITY AND MEASURED VALUE OF RESISTIVITY

Legend:
- ●—●—● INLET RESISTIVITY R1
- ✕—✕—✕ OUTLET RESISTIVITY R1
- △—△—△ FLOW RATE L
- ——— ACTUAL CAPACITY C
- —·—·— CAPACITY LIMIT

X-axis: ELAPSED TIME (HOURS)

Y-axis: RESISTIVITY VALUE/ION-EXCHANGE CAPACITY

EP 1 486 281 A1

FIG. 8

| T | R 1 | R 2 | L | C | L I M I T |
|---|---|---|---|---|---|
| 0 | 5 | 20 | 12 | 18.0 | 1 |
| 10 | 5 | 19.8 | 12 | 17.8 | 1 |
| 20 | 5 | 19 | 12 | 16.8 | 1 |
| 30 | 5 | 17 | 12 | 14.4 | 1 |
| 40 | 4.8 | 16 | 12 | 13.4 | 1 |
| 50 | 4.5 | 15.3 | 12 | 13.0 | 1 |
| 60 | 4.3 | 14.7 | 12 | 12.5 | 1 |
| 70 | 5 | 14 | 12 | 10.8 | 1 |
| 80 | 5.4 | 13.2 | 12 | 9.4 | 1 |
| 90 | 5.6 | 12.8 | 12 | 8.6 | 1 |
| 100 | 5.4 | 12 | 12 | 7.9 | 1 |
| 110 | 5.2 | 11 | 12 | 7.0 | 1 |
| 120 | 5 | 9.4 | 12 | 5.3 | 1 |
| 130 | 5 | 9 | 12 | 4.8 | 1 |
| 140 | 4.8 | 8 | 12 | 3.8 | 1 |
| 150 | 4.3 | 7 | 12 | 3.2 | 1 |
| 160 | 4.5 | 7 | 12 | 3.0 | 1 |
| 170 | 4.9 | 6.5 | 12 | 1.9 | 1 |
| 180 | 5.2 | 6 | 12 | 1.0 | 1 |
| 190 | 5.5 | 5.8 | 12 | 0.4 | 1 |
| 200 | 5.2 | 5.3 | 12 | 0.1 | 1 |
| 210 | 3 | 3.5 | 12 | 0.6 | 1 |
| 220 | 2.5 | 3 | 12 | 0.6 | 1 |
| 230 | 2 | 2.5 | 12 | 0.6 | 1 |
| 240 | 2 | 2.3 | 12 | 0.4 | 1 |
| 250 | 2 | 2 | 12 | 0.0 | 1 |
| 260 | 1.2 | 1.2 | 12 | 0.0 | 1 |
| 270 | 0.7 | 0.7 | 12 | 0.0 | 1 |
| 280 | 0.5 | 0.5 | 12 | 0.0 | 1 |
| 290 | 0.5 | 0.5 | 12 | 0.0 | 1 |
| 300 | 0.5 | 0.5 | 12 | 0.0 | 1 |

FIG. 9

CHANGE IN ION-EXCHANGE CAPACITY AND MEASURED VALUE OF RESISTIVITY

## FIG.10

CHANGE IN ION-EXCHANGE CAPACITY AND MEASURED VALUE OF RESISTIVITY

FIG.11

CHANGE IN ION-EXCHANGE CAPACITY AND MEASURED VALUE OF RESISTIVITY

EXAMPLE OF DISPLAY WHEN SELECTOR
VALVE 3 IS IN OFF-POSITION

INLET RESISTIVITY R1
OUTLET RESISTIVITY R
FLOW RATE L
ACTUAL CAPACITY C
CAPACITY LIMIT LIM

ELAPSED TIME (HOURS)

EP 1 486 281 A1

## EUROPEAN SEARCH REPORT

European Patent Office

Application Number

EP 04 25 3256

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 0121, no. 90 (M-704), 3 June 1988 (1988-06-03) & JP 62 297020 A (MITSUBISHI ELECTRIC CORP), 24 December 1987 (1987-12-24) | 1-7, 9-14, 17-22 | B23H1/10 B23H7/36 |
| A | * abstract * | 8,9,15, 16 | |
| X | PATENT ABSTRACTS OF JAPAN vol. 0121, no. 97 (M-706), 8 June 1988 (1988-06-08) & JP 63 002620 A (SATAKE ENG CO LTD), 7 January 1988 (1988-01-07) | 1-7, 9-14, 17-22 | |
| A | * abstract * | 8,9,15, 16 | |
| A | EP 0 417 289 A (FANUC LTD) 20 March 1991 (1991-03-20) * column 5, line 8 - line 42 * | 1-22 | |
| | | | TECHNICAL FIELDS SEARCHED (Int.Cl.7) |
| | | | B23H |

The present search report has been drawn up for all claims

| Place of search | Date of completion of the search | Examiner |
|---|---|---|
| The Hague | 27 September 2004 | Haegeman, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

23

**ANNEX TO THE EUROPEAN SEARCH REPORT
ON EUROPEAN PATENT APPLICATION NO.**

EP 04 25 3256

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2004

| Patent document cited in search report | | Publication date | Patent family member(s) | | Publication date |
|---|---|---|---|---|---|
| JP 62297020 | A | 24-12-1987 | NONE | | |
| JP 63002620 | A | 07-01-1988 | NONE | | |
| EP 0417289 | A | 20-03-1991 | JP | 2131821 A | 21-05-1990 |
| | | | DE | 68910127 D1 | 25-11-1993 |
| | | | DE | 68910127 T2 | 10-02-1994 |
| | | | EP | 0417289 A1 | 20-03-1991 |
| | | | WO | 9005040 A1 | 17-05-1990 |
| | | | KR | 9604236 B1 | 28-03-1996 |
| | | | US | 5081332 A | 14-01-1992 |

EPO FORM P0459

For more details about this annex : see Official Journal of the European Patent Office, No. 12/82